# EUROPÄISCHE PATENTSCHRIFT

(11) **EP 1 165 970 B1**
(45) Veröffentlichungstag und Bekanntmachung des Hinweises auf die Patenterteilung: **14.07.2004**
(21) Anmeldenummer: 00904962.8
(22) Anmeldetag: 26.01.2000
(51) Int. Cl.: F16B 13/06

(54) **SPREIZDÜBEL**
EXPANSION ANCHOR
TAMPON EXTENSIBLE

(30) Priorität: 06.04.1999 DE 19915474
(43) Veröffentlichungstag der Anmeldung: 02.01.2002
(73) Patentinhaber: fischerwerke Artur Fischer GmbH & Co. KG, 72178 Waldachtal (DE)
(72) Erfinder: HEIN, Bernd, D-72270 Schönmunzach (DE); HEINZELMANN, Werner, D-72250 Freudenstadt (DE)
(86) Internationale Anmeldenummer: PCT/EP2000/000567
(87) Internationale Veröffentlichungsnummer: WO 2000/060245

(56) Entgegenhaltungen:
- DE-U- 9 310 356
- US-A- 1 852 089
- PATENT ABSTRACTS OF JAPAN vol. 017, no. 423 (M-1458), 6. August 1993 (1993-08-06) & JP 05 087110 A (KUBOTA CORP), 6. April 1993 (1993-04-06)

## Beschreibung

Die Erfindung betrifft einen Spreizdübel mit den Merkmalen des Oberbegriffs des Anspruchs 1.

Ein derartiger Spreizdübel aus Kunststoff mit einer am hinteren Ende einen Kragen aufweisenden Dübelhülse ist aus der DE 32 14 440 A1 bekannt. Solche Dübel werden in der Fachsprache als Rahmendübel bezeichnet, da sie vorwiegend für die Befestigung von Fenster- und Türrahmen verwendet werden. Wesentliches Merkmal eines Rahmendübels ist der am hinteren Ende der Dübelhülse angeordnete Kragen, der an der Außenfläche oder in einer Ansenkung der Bohrung des zu befestigenden Gegenstandes anliegt. Bei der Verspreizung des Dübels im Bohrloch des Ankergrunds liegt der Schraubenkopf am Kragen an, so daß beim Eindrehen der Schraube in den Spreizkörper dieser in die Dübelhülse eingezogen wird. Bei diesem Spreizvorgang wird gleichzeitig über den Kragen und dem auf dem Kragen anliegenden Schraubenkopf der zu befestigende Gegenstand gegen die Mauerwerksaußenfläche verspannt. Tritt beispielsweise durch Rißbildung im Mauerwerk eine Bohrlocherweiterung auf, verhindert der Kragen eine die Nachspreizung bewirkende Axialverschiebung der Dübelhülse. Die Folge ist eine Lockerung des Spreizdübels im Bohrloch.

Der Erfindung liegt die Aufgabe zugrunde, einen Spreizdübel der Eingangs genannten Art so auszubilden, daß er auch bei einer Bohrlocherweiterung eine hohe Verankerungskraft aufweist.

Diese Aufgabe wird erfindungsgemäß durch die Merkmale des Anspruchs 1 gelöst. Die Dübelhülse des erfindungsgemäßen Spreizdübels weist eine Dehn- und/oder Solltrennstelle auf, die eine axiale Dehnung der Dübelhülse und/oder eine Trennung der Dübelhülse in zwei Teile bei Axialbelastung der Dübelhülse ermöglicht. Erweitert sich das Bohrloch, in welchem der Spreizdübel verankert ist, beispielsweise durch eine Rißbildung im Mauerwerk und verringert sich dadurch die Verankerungskraft des Spreizdübels im Mauerwerk, so wird die Dübelhülse des erfindungsgemäßen Spreizdübels bei einer axialen Belastung in axialer Richtung gedehnt oder sie wird in zwei Teile getrennt. Ein hinterer Teil der Dübelhülse, der sich außerhalb des Mauerwerks in dem am Mauerwerk befestigten Bauteil befindet, entfemt sich ein kurzes Stück axial vom Mauerwerk. Gemeinsam mit dem hinteren Teil der Dübelhülse bewegt sich die Spreizschraube, sie verschiebt sich gegenüber dem vorderen, im Mauerwerk verankerten Teil der Dübelhülse. Durch ihre Verschiebung zieht die Spreizschraube den Spreizkörper tiefer in den vorderen Teil der Dübelhülse ein, wobei der Spreizkörper die Dübelhülse weiter aufspreizt. Dieses weitere Aufspreizen wird als Nachspreizen bezeichnet. Der erfindungsgemäße Spreizdübel weist ein Nachspreizverhalten auf, das bei einer Bohrlocherweiterung eine hohe Verankerungskraft des Spreizdübels bewirkt. Die Spreizschraube ist in der Dübelhülse, zumindest in deren vorderem, vor der Dehn- und/oder Solltrennstelle liegenden Bereich, axial verschieblich.

Dehn- und/oder Solltrennstelle sind nicht notwendigerweise Alternativen, es kann sich auch um ein und dasselbe handeln. Die Dehn- und/oder Solltrennstelle kann bei axialer Belastung des Spreizdübels zunächst eine axiale Dehnung der Dübelhülse ermöglichen. Steigt die axiale Belastung an, trennt sich die Dübelhülse an der Dehn- und/oder Solltrennstelle in zwei Teile.

Bei einer Ausgestaltung der Erfindung ist die Dehn- und/oder Solltrennstelle durch örtlich begrenzte Verringerung einer Wandstärke der Dübelhülse ausgebildet. Bei einer Ausgestaltung der Erfindung bildet eine in Umfangsrichtung verlaufende Nut der Dübelhülse die Dehn- und/oder Solltrennstelle.

Bei einer Ausgestaltung der Erfindung weist die Dübelhülse mindestens einen in Längsrichtung oder auch in einem Winkel zur Längsrichtung beispielsweise wendelförmig verlaufenden Schlitz in einem vorderen, vor der Dehn- und/oder Solltrennstelle liegenden Bereich auf. Der Schlitz verringert eine zum Aufspreizen der Dübelhülse erforderliche Spreizkraft.

In bevorzugter Ausgestaltung vergrößert sich eine Innenweite der Dübelhülse zum vorderen Ende hin. Form und Winkel der Vergrößerung sind an den einzuziehenden Spreizkörper angepaßt, bei Verwendung eines Spreizkonus als Spreizkörper vergrößert sich die Innnenweite der Dübelhülse konisch. Durch diese Anpassung der Dübelhülse an den Spreizkörper wird das Aufspreizen erleichtert und die Aufspreizung wird verbessert.

Der Spreizkörper hat beispielsweise die Form eines Keils, einer Pyramide oder eines Konus.

Um die Aufspreizung zu vergrößern ist bei einer Ausgestaltung der Erfindung ein Spreizkörper vorgesehen, der nicht nur beim Einziehen in die Dübelhülse diese aufspreizt, sondern der selbst durch das Einschrauben der Spreizschraube aufgespreizt wird. Ein aufspreizbarer Spreizkörper läßt sich beispielsweise dadurch erreichen, daß das Schraubenloch des Spreizkörpers ein Untermaß in Bezug auf die Spreizschraube aufweist. Zur Erleichterung der Aufspreizung kann der Spreizkörper geschlitzt sein.

Um das Mitdrehen des Spreizkörpers beim Einschrauben der Spreizschraube zu vermeiden, ist bei einer Ausgestaltung der Erfindung eine Schiebeführung des Spreizkörpers in der Dübelhülse vorgesehen, die eine axiale Verschiebung des Spreizkörpers zuläßt, eine Drehung des Spreizkörpers in der Dübelhülse jedoch verhindert. Die Schiebeführung kann durch ein vom Spreizkörper nach außen abstehendes Führungselement bewirkt sein, das in den bei einer Ausgestaltung der Erfindung vorgesehenen Schlitz der Dübelhülse eingreift. Das Führungselement kann beispielsweise ein Zapfen oder eine Rippe sein. Ist mehr als ein Schlitz in der Dübelhülse angebracht, kann auch der Spreizkörper mehrere Führungselemente aufweisen.

Die Erfindung wird nachfolgend anhand eines in der Zeichnung dargestellten Ausführungsbeispiels näher erläutert. Es zeigen:
- Figur 1: einen erfindungsgemäßen Spreizdübel in Seitenansicht;
- Figur 2: den Spreizdübel aus Figur 1 im Achsschnitt;
- Figur 3: einen Spreizkörper des Spreizdübels aus Figur 1 in perspektivischer und größerer Darstellung; und
- Figur 4: den Spreizkörper aus Figur 3 im Achsschnit in anderem Maßstab.

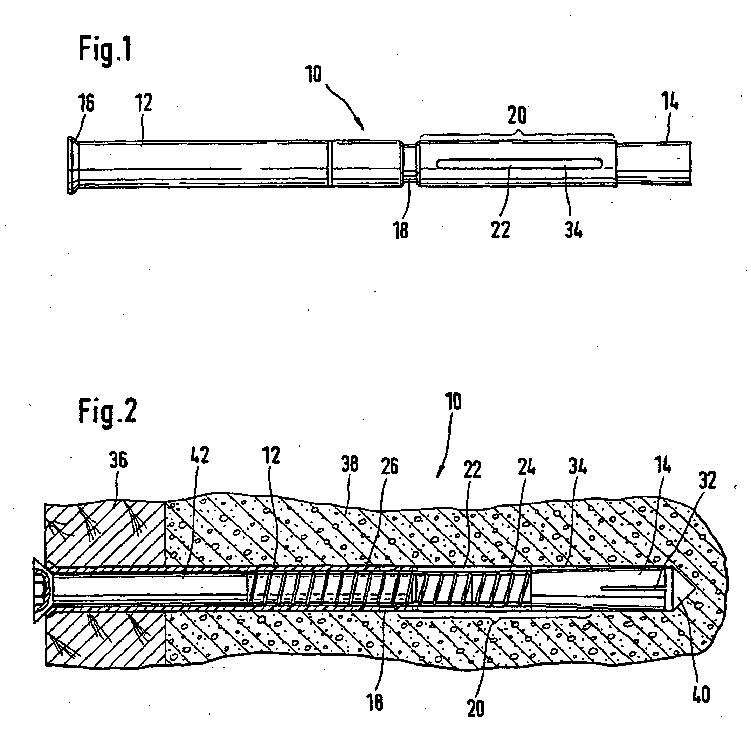

Der in Figur 1 dargestellte, erfindungsgemäße Spreizdübel 10 weist eine rohrförmige Spreizhülse 12 auf, in deren vorderem Ende ein Spreizkörper 14 mit einem Teil seiner Länge eingesetzt ist. Die Dübelhülse 12 ist als Spritzgießteil aus Kunststoff hergestellt, der Spreizkörper 14 ist ebenfalls als Kunststoffteil hergestellt, er kann faserverstärkt sein und hat insbesondere eine von der Dübelhülse 12 abweichende Shore-Härte.

Die Dübelhülse 12 weist an ihrem hinteren Ende einen trichterförmigen Kragen 16 zur Aufnahme eines Senkkopfs einer in Figur 1 nicht dargestellten Spreizschraube auf. In einem Längsmittelbereich ist die Dübelhülse 12 mit einer umlaufenden Nut 18 versehen, die eine Wandstärke der Dübelhülse 12 verkleinert und eine Dehn- und/oder Solltrennstelle 18 der Dübelhülse 12 bildet.

Ein vorderer Bereich der Dübelhülse 12, der näherungsweise von der Dehn- und/oder Solltrennstelle 18 bis zum vorderen Ende der Dübelhülse 12 reicht, ist als Spreizbereich 20 ausgebildet. Im Spreizbereich 20 ist die Dübelhülse 12 mit zwei einander gegenüber liegend angeordneten Längsschlitzen 22 versehen, die beidseitig geschlossen enden. Die Längsschlitze 22 erleichtern ein Aufspreizen der Dübelhülse 12 im Spreizbereich 20 mit dem Spreizkörper 14. Wie in Figur 2 zu sehen, erweitert sich die Dübelhülse 12 an ihrer Innenseite mit einem Innenkonus 24 zu ihrem vorderen Ende hin. Der Innenkonus 24 reicht vom vorderen Ende der Dübelhülse 12 bis über einen Teil der Länge der Längsschlitze 22 und geht dann in ein zylindrisches Innenloch 26 der Dübelhülse 12 über.

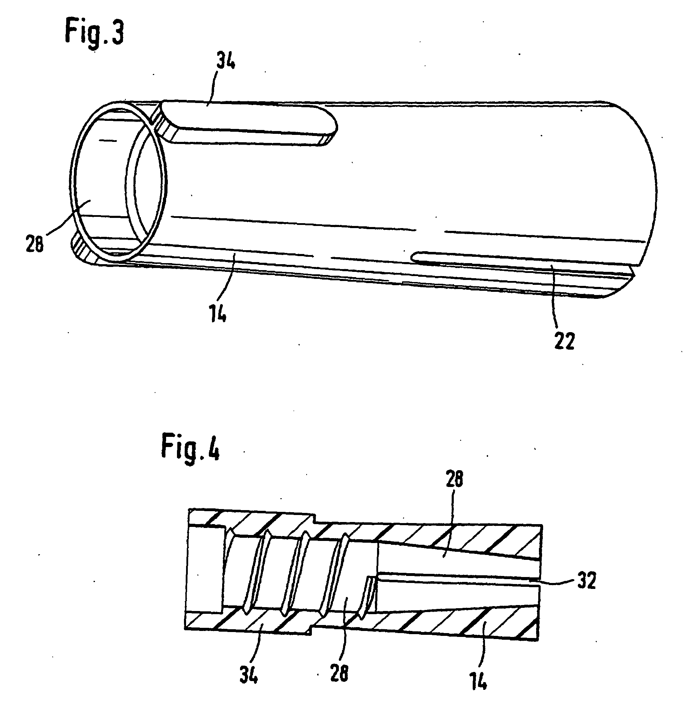

Der in Figuren 3 und 4 dargestellte Spreizkörper 14 weist eine konische Außenfläche auf, deren Konuswinkel mit einem Konuswinkel des innenkonus 24 der Dübelhülse 12 übereinstimmt. Der Spreizkörper 14 weist ein axial durchgehendes Schraubenloch 28 auf, das wie in Figur 4 dargestellt, ein Innengewinde aufweisen kann. Ebenso ist es möglich, das Schraubenloch 28 glattwandig auszubilden und ein innengewinde durch Eindrehen einer Spreizschraube einzuschneiden. Das Schraubenloch 28 weist einen zylindrischen Abschnitt auf und verjüngt sich in einem vorderen Bereich des Spreizkörpers 14 mit einem Innenkonus 30. Die Verjüngung des innenkonus 30 ist einer Verjüngung der konischen Außenfläche des Spreizkörpers 14 entgegengerichtet. Der Innenkonus 30 bewirkt ein Aufspreizen des Spreizkörpers 14 beim Einschrauben einer Spreizschraube. Um das Aufspreizen des Spreizkörpers 14 zu erleichtern, ist der Spreizkörper 14 mit einem quer durch den Spreizkörper 14 durchgehenden Längsschlitz 32 versehen, der über die Länge des Innenkonus 30 reicht und am vorderen Ende des Spreizkörpers 14 offen endet. An einem hinteren Ende des Spreizkörpers 14 stehen zwei Führungsrippen 34 nach außen ab, die in Längsrichtung verlaufen und einander gegenüber angeordnet sind. Die Führungsrippen 34 bilden Führungselemente des Spreizkörpers 14.

Der Spreizkörper 14 ist mit seinem hinteren Ende in das vordere Ende der Dübelhülse 12 eingesetzt, die Führungsrippen 34 greifen in die Längsschlitze 22 der Dübelhülse 12 ein. In einem nichtaufgespreizten Grundzustand des Spreizdübels 10, wie er in Figur 1 dargestellt ist, befinden sich die Führungsrippen 34 des Spreizkörpers 14 am vorderen Ende der Längsschlitze 22. Die Längsschlitze 22 und die Führungsrippen 34 bilden eine Schiebeführung des Spreizdübels 10, die den Spreizkörper 14 axial verschiebbar und drehfest in der Dübelhülse 12 führen. Im nicht aufgespreizten Grundzustand steht im dargestellten und beschriebenen Ausführungsbeispiel der Spreizkörper 14 über ein Teil seiner Länge aus der Dübelhülse 12 vor.

Der erfindungsgemäße Dübel 10 bildet einen sog. Rahmendübel. Wie in Figur 2 dargestellt, dient der Spreizdübel 10 zur Befestigung eines Bauteils, beispielsweise einer Holzlatte 36, an beispielsweise einer Wand oder Decke, die nachfolgend als Mauerwerk 38 bezeichnet wird. Zur Befestigung wird ein Bohrloch 40 durch die Holzlatte 36 hindurch in das Mauerwerk 38 gebohrt. Der Spreizdübel 10 wird durch die Holzlatte 36 hindurch in das Bohrloch 40 im Mauerwerk 38 eingebracht. In die Dübelhülse 12 ist eine Holzschraube als Spreizschraube 42 eingesteckt und lose in das Schraubenloch 28 des Spreizkörpers 14 eingeschraubt. Ein Außendurchmesser der Spreizschraube 42 ist nicht größer als ein Innendurchmesser der Dübelhülse 12, so daß die Spreizschraube 42 in der Dübelhülse 12 axial verschieblich ist. Die Dübelhülse 12 geht mit ihrem hinteren Bereich durch das Loch in der Holzlatte 36 hindurch, die Dübelhülse 12 schließt mit ihrem Kragen 16 in etwa bündig mit der Holzlatte 36 ab.

Zur Verankerung des Spreizdübels 10 im Mauerwerk 38 wird die Spreizschraube 42 angezogen, sie zieht dabei den Spreizkörper 14 ein Stück weit in den Spreizbereich 20 der Dübelhülse 12 ein und spreizt die Dübelhülse 12 im Spreizbereich 20 auf. Durch die Aufspreizung ist der Spreizdübel 10 im Mauerwerk 38 verankert und die Holzlatte 36 am Mauerwerk 38 befestigt. Durch das Einschrauben der Spreizschraube 42 in den Innenkonus 30 des Spreizkörpers 14 wird der Spreizkörper 14 aufgespreizt und die Aufspreizung der Dübelhülse 12 im Spreizbereich 20 verstärkt. Die Verankerung des Spreizdübels 10 im Mauerwerk 38 wird dadurch verbessert.

Durch eine axiale Belastung des Spreizdübels 10 wird die Dübelhülse 12 an der Dehn- und/oder Solltrennstelle 18 axial gedehnt. Weitet sich das Bohrloch 40 im Mauerwerk 38 beispielsweise in Folge einer Rißbildung auf, ermöglicht die Dehn- und/oder Solltrennstelle 18, daß sich der hintere Bereich der Dübelhülse 12 axial vom vorderen Spreizbereich 20 weg verschiebt. Zusammen mit dem hinteren Bereich der Dübelhülse 12 verschiebt sich die in der Dübelhülse 12 einliegende Spreizschraube 42, die in der Dübelhülse 12 verschieblich ist. Die Verschiebung der Spreizschraube 42 bewirkt, daß der Spreizkörper 14 tiefer in den Spreizbereich 20 der Dübelhülse 12 eingezogen wird, die Dübelhülse 12 wird im Spreizbereich 20 nachgespreizt, der Spreizdübel 10 bleibt auch bei einer Erweiterung des Bohrlochs 40 mit im Wesentlichen unveränderter Verankerungskraft im Mauerwerk 38 verankert. Bei hoher axialer Belastung und einer großen Erweiterung des Bohrlochs 40 kann die Dübelhülse 12 an der Dehn- und/oder Solltrennstelle 18 in zwei Teile reißen, wodurch die Axialbeweglichkeit des hinteren Teils der Dübelhülse 12 gegenüber ihrem vorderen Teil und damit das Nachspreizverhaiten des Spreizdübels 10 vergrößert ist.

## Patentansprüche

1. Spreizdübel aus Kunststoff mit einer an ihrem hinteren Ende einen Kragen (16) aufweisenden Dübelhülse (12), durch die eine Spreizschraube (42) steckbar ist, und mit einem Spreizkörper (14), der ein Schraubenloch (28) zum Einschrauben der Spreizschraube aufweist und der durch Einschrauben der Spreizschraube in die Dübelhülse einziehbar ist und dabei die Dübelhülse aufspreizt, **dadurch gekennzeichnet, dass** die Dübelhülse (12) eine Dehn- und/oder Solltrennstelle (18) aufweist, die eine axiale Dehnung und/oder eine Trennung der Dübelhülse (12) in zwei Teile ermöglicht.

2. Spreizdübel nach Anspruch 1, **dadurch gekennzeichnet, daß** die Dehn- und/oder Solltrennstelle (18) durch Verkleinerung einer Wandstärke der Dübelhülse (12) gebildet ist.

3. Spreizdübel nach Anspruch 2, **dadurch gekennzeichnet, daß** die Dehn- und/oder Solitrennstelle (18) als in Umfangsrichtung verlaufende Nut der Dübelhülse (12) ausgebildet ist.

4. Spreizdübel nach Anspruch 1, **dadurch gekennzeichnet, daß** die Dübelhülse (12) mindestens einen in etwa in Längsrichtung verlaufenden Schlitz (22) in einem vorderen Bereich (20) aufweist.

5. Spreizdübel nach Anspruch 1, **dadurch gekennzeichnet, daß** sich eine Innenweite der Dübelhülse (12) in Richtung eines vorderen Endes vergrößert.

6. Spreizdübel nach Anspruch 1, **dadurch gekennzeichnet, daß** der Spreizkörper (14) ein Spreizkeil oder ein Spreizkonus ist.

7. Spreizdübel nach Anspruch 1, **dadurch gekennzeichnet, daß** der Spreizkörper (14) durch Einschrauben der Spreizschraube (42) aufspreizbar ist.

8. Spreizdübel nach Anspruch 1, **dadurch gekennzeichnet, daß** der Spreizdübel (10) eine Schiebeführung (22, 34) aufweist, mit der der Spreizkörper (14) axial verschieblich und drehfest in der Dübelhülse (12) geführt ist.

9. Spreizdübel nach Anspruch 8, **dadurch gekennzeichnet, daß** der Spreizkörper (14) mindestens ein nach außen abstehendes Führungselement (34) aufweist, welches in den mindestens einen Schlitz (22) der Dübelhülse (12) eingreift und zusammen mit dem Schlitz (22) die Schiebeführung (22, 34) bildet.

## Revendications

1. Cheville expansible en matière plastique comportant un manchon (12), qui est muni d'une collerette (16) au niveau de son extrémité arrière et à travers lequel on peut enfoncer une vis d'expansion (42), et comportant un corps expansible (14), qui comporte un trou taraudé (28) pour y visser la vis d'expansion et qui est rétractable par le vissage de la vis d'expansion dans le manchon et, de ce fait, évase le manchon, **caractérisée en ce que** le manchon (12) comporte une zone de dilatation et/ou de séparation théorique (18) qui permet une dilatation axiale et/ou une séparation du manchon (12) en deux parties.

2. Cheville expansible selon la revendication 1, **caractérisée en ce que** la zone de dilatation et/ou de séparation théorique (18) est formée par une diminution de l'épaisseur de la paroi du manchon (12).

3. Cheville expansible selon la revendication 2, **caractérisée en ce que** la zone de dilatation et/ou de séparation théorique (18) est conçue sous forme de rainure qui s'étend dans le sens périphérique du manchon (12).

4. Cheville expansible selon la revendication 1, **caractérisée en ce que** le manchon (12) comporte au moins une fente (22) qui s'étend longitudinalement dans une zone avant (20).

5. Cheville expansible selon la revendication 1, **caractérisée en ce qu'**une largeur intérieure du manchon (12) s'agrandit en direction d'une extrémité avant.

6. Cheville expansible selon la revendication 1, **caractérisée en ce que** le corps expansible (14) est un coin expansible ou un cône expansible.

7. Cheville expansible selon la revendication 1, **caractérisée en ce que** le corps expansible (14) peut s'évaser sous l'effet du vissage de la vis d'expansion (42).

8. Cheville expansible selon la revendication 1, **caractérisée en ce que** la cheville expansible (10) comporte un guidage à coulisse (22, 34), par lequel le corps expansible (14) est logé dans le manchon (12) de manière mobile dans le sens axial et solidaire en rotation.

9. Cheville expansible selon la revendication 8, **caractérisée en ce que** le corps expansible (14) comporte au moins un élément de guidage (34) en saillie vers l'extérieur, qui entre en prise dans la fente (22), au moins au nombre d'une, du manchon (12) et forme conjointement avec la fente (22) le guidage à coulisse (22, 34).

## Claims

1. Expansible fixing plug made from plastics material, having a plug sleeve (12) which is provided with a collar (16) at its rear end and through which an expansion screw (42) can be inserted, and having an expansion member (14) which has a screw hole (28) for screwing in the expansion screw and which is arranged to be drawn into the plug sleeve as a result of the expansion screw's being screwed in, thereby expanding the plug sleeve, **characterised in that** the plug sleeve (12) has a stretching and/or intended separating zone (18) which allows axial stretching and/or separation of the plug sleeve (12) into two parts.

2. Expansible fixing plug according to claim 1, **characterised in that** the stretching and/or intended separating zone (18) is formed by a reduction in the wall thickness of the plug sleeve (12).

3. Expansible fixing plug according to claim 2, **characterised in that** the stretching and/or intended separating zone (18) is formed by a groove extending in a circumferential direction in the plug sleeve (12).

4. Expansible fixing plug according to claim 1, **characterised in that** the front region (20) of the plug sleeve (12) has at least one slot (22) extending in an approximately longitudinal direction.

5. Expansible fixing plug according to claim 1, **characterised in that** the internal width of the plug sleeve (12) becomes larger towards the front end.

6. Expansible fixing plug according to claim 1, **characterised in that** the expansion member (14) is an expansion wedge or an expansion cone.

7. Expansible fixing plug according to claim 1, **characterised in that** the expansion member (14) is arranged to be expanded by screwing the expansion screw (42) in.

8. Expansible fixing plug according to claim 1, **characterised in that** the expansible fixing plug (10) has a slide arrangement (22, 34), by means of which the expansion member (14) is guided in the plug sleeve (12) in axially displaceable and non-rotatable manner.

9. Expansible fixing plug according to claim 8, **characterised in that** the expansion member (14) has at least one outwardly projecting guide element (34), which engages in the at least one slot (22) of the plug sleeve (12) and which, together with the slot (22), forms the slide arrangement (22, 34).
